# EUROPÄISCHE PATENTANMELDUNG

(11) **EP 1 884 921 A1**
(43) Veröffentlichungstag der Anmeldung: **06.02.2008**
(21) Anmeldenummer: 07014846.5
(22) Anmeldetag: 28.07.2007
(51) Int. Cl.: G10L 13/04, G10L 15/26, G01C 21/36, B60R 16/037

(54) **Verfahren zur Unterstützung des Bedieners eines Spracheingabesystems**

(30) Priorität: 01.08.2006 DE 102006035780
(71) Anmelder: Bayerische Motoren Werke Aktiengesellschaft, 80809 München (DE)
(72) Erfinder: Huber, Alexander, 85386 Eching (DE); Eckert, Jochen, 81667 München (DE)

(57) **Zusammenfassung**

Bei einem Verfahren zur Unterstützung des Bedieners eines Spracheingabesystems, bei welchem eine Menge möglicher Sprachbefehle optisch an den Bediener ausgegeben wird, werden die Sprachbefehle zumindest teilweise nacheinander akustisch an den Bediener ausgegeben und während der akustischen Ausgabe eines Sprachbefehls wird derselbe Sprachbefehl in der optischen Ausgabe hervorgehoben.

## Beschreibung

Die Erfindung betrifft ein Verfahren zur Unterstützung des Bedieners eines Spracheingabesystems, bei welchem eine Menge möglicher Sprachbefehle optisch an den Bediener ausgegeben wird.

Ein solches Verfahren ist beispielsweise aus der US 2004 / 0030559 A1 oder der DE 100 12 572 C2 bekannt. Die optische Ausgabe der Menge möglicher Sprachbefehle veranschaulicht dem Bediener die Optionen, die sich ihm hinsichtlich der Spracheingabe bieten. Diese Optionen können bei einem Spracheingabesystem situationsunabhängig stets gleich sein. Besonders vorteilhaft ist eine Ausgabe einer Menge möglicher Sprachbefehle jedoch dann, wenn sie kontext-sensitiv erfolgt, d.h. wenn diejenigen Sprachbefehle an den Bediener ausgegeben werden, die in der aktuellen Situation möglich sind. Eine solche kontext-sensitive Ausgabe kann beispielsweise erfolgen im Rahmen eines "Nachfragens" des Spracheingabesystems, nachdem ein vorhergehender Sprachbefehl des Bedieners nicht eindeutig verstanden wurde.

Nachteilig an den aus dem Stand der Technik bekannten Verfahren der eingangs genannten Gattung ist, dass der Bediener aus der optischen Darstellung nur begrenzten Nutzen ziehen kann, da er seinen Blick zwingend auf das zur Ausgabe verwendete Anzeigeelement richten muss, um die Menge möglicher Sprachbefehle zu erkennen. Insbesondere bei der Anwendung von Spracheingabeverfahren in Kraftfahrzeugen ist eine Abwendung des Blicks vom Verkehrsgeschehen nicht wünschenswert, da eine Ablenkung des Fahrers vom Verkehrsgeschehen mit großen Gefahren verbunden sein kann. Auch in anderen Einsatzgebieten kann es gefährlich oder zumindest störend sein, wenn der Blick des Bedieners zwingend auf das Anzeigeelement gerichtet werden muss, welches die Menge möglicher Sprachbefehle zeigt.

Aufgabe der Erfindung ist es, ein einfaches gattungsgemäßes Verfahren zu schaffen, durch welches die Aufmerksamkeit des Bedieners weniger stark gebunden wird.

Diese Aufgabe wird gelöst durch ein Verfahren gemäß Anspruch 1. Vorteilhafte Ausführungsformen und Weiterbildungen ergeben sich aus den abhängigen Ansprüchen.

Da die Sprachbefehle zumindest teilweise nacheinander akustisch an den Bediener ausgegeben werden, muss der Bediener seinen Blick nicht zwingend auf das zur Ausgabe verwendete Anzeigeelement richten. Stattdessen kann er einfach auditiv aufnehmen, welche Optionen sich ihm bieten.

Die Erfindung schafft eine besonders vorteilhafte Kombination der optischen und der akustischen Ausgabe möglicher Sprachbefehle, indem während der akustischen Ausgabe eines Sprachbefehls derselbe Sprachbefehl in der optischen Ausgabe hervorgehoben wird.

Dies bietet verschiedene Vorteile. Da durch die optische und die akustische Ausgabe nun zwei Sinnesmodalitäten (Sehen und Hören bzw. visuell und auditiv) des Bedieners angesprochen werden, kann dieser die an ihn ausgegebenen Sprachbefehle besonders gut wahrnehmen. Die möglichen Sprachbefehle werden dem Bediener gewissermaßen multimedial präsentiert. Die vielfältigen Vorteile einer multimedialen Präsentation sind aus der Wahrnehmungsforschung bekannt.

Durch die Erfindung kann die Aufnahme der an den Bediener ausgegebenen Optionen ins Kurzzeitgedächtnis des Bedieners gefördert werden, wodurch der Bediener sich bei der anschließenden Spracheingabe in verbessertem Maße an die zuvor ausgegebenen Optionen erinnern kann.

Der Bediener kann die multimediale Präsentation sehr entspannt verfolgen, da er durch die Redundanz der multimedialen Ausgabe nie das Gefühl hat, er könnte "etwas versäumen". Dies kann zu seiner Entspannung und/oder geringerer Ermüdung beitragen, was insbesondere beim Einsatz der Erfindung in Kraftfahrzeugen von großer Bedeutung ist.

Da der Bediener durch die erfindungsgemäße multimediale Darbietung besser auf die anschließende Eingabe eines Sprachbefehls vorbereitet wird, kann die gesamte erforderliche Eingabezeit durch die Erfindung reduziert werden.

Durch die simultane optische Hervorhebung des gerade akustisch ausgegebenen Sprachbefehls wird es dem Bediener beispielsweise auch ermöglicht, seinen Blick kurzfristig oder dauerhaft von dem für die optische Ausgabe verwendeten Ausgabeelement abzuwenden, ohne dabei den "roten Faden" des Vortrags zu verlieren. Wenn er den Blick dann später wieder auf das für die optische Ausgabe verwendeten Ausgabeelement lenkt, kann er der optischen Hervorhebung sofort entnehmen, welcher optisch repräsentierte Sprachbefehle gerade akustisch ausgegeben wird. Der Bediener kann somit beispielsweise erkennen, an welcher Stelle die multimediale Präsentation der möglichen Sprachbefehle angelangt ist.

Der Bediener kann je nach Vorliebe bzw. je nach Vorhandensein anderer akustischer und/oder optischer Ablenkungsquellen seine Aufmerksamkeit wahlweise ganz oder überwiegend der akustischen oder der optischen Ausgabe widmen. Somit kann sich der Bediener "trotz" der zusätzlichen akustischen Ausgabe wahlweise weiterhin überwiegend oder ausschließlich an der optischen Ausgabe orientieren. Insbesondere kann der Bediener durch die Erfindung jedoch auch je nach Vorliebe bzw. je nach Vorhandensein anderer akustischer und/oder optischer Ablenkungsquellen wechselweise seine Aufmerksamkeit der akustischen oder der optischen Ausgabe widmen. Die optische Hervorhebung unterstützt ihn jeweils dabei, sich bei der Rückkehr zur optischen Ausgabe innerhalb dieser zu orientieren.

Der Bediener kann der akustischen Ausgabe entnehmen, wie ein textuell optisch ausgegebener Sprachbefehl auszusprechen und/oder zu betonen ist. Er wird dadurch bei der Artikulation seiner Sprachbefehle unterstützt und die Erkennungsrate des Spracherkennungssystems wird indirekt verbessert, indem die Qualität der Sprachbefehle des Bedieners verbessert wird. Dies kann insbesondere dann vorteilhaft sein, wenn der Bediener die eingestellte Sprache des Spracheingabesystems nicht beherrscht.

Gemäß einer bevorzugten Ausführungsform der Erfindung bietet die optische Ausgabe dem Bediener nicht unmittelbar den Text eines möglichen Sprachbefehls dar. Beispielsweise kann die optische Ausgabe in Symbolform erfolgen. In solchen Fällen kann die akustische Ausgabe den Bediener anleiten, welcher Wortlaut eines Sprachbefehls einem bestimmten optisch ausgegebenen Sprachbefehl zugeordnet ist. Die Zuordnung wird für den Bediener durch die erfindungsgemäße Hervorhebung in der optischen Ausgabe erkennbar. Beispielsweise kann für den Sprachbefehl "Hilfe" in der optischen Ausgabe lediglich ein Fragezeichen als Symbol ausgegeben werden. Die akustische Ausgabe verdeutlicht dem Bediener jedoch, dass der Wortlaut des zugehörigen Sprachbefehls korrekt "Hilfe" lautet. Auch grafische Symbole, etwa eine Musiknote für den Sprachbefehl "Radio ein", oder Abkürzungen, etwa der Text "Nebel-SW ein" für den Sprachbefehl "Nebelscheinwerfer ein" werden ermöglicht. Die Gestaltungsfreiheit der optischen Ausgabe wird dadurch erheblich verbessert. Beispielsweise kann dann auch die optische Ausgabe für unterschiedliche Sprachvarianten eines Bediensystems gleich ausgeführt werden. Dem Sprachbefehl "Help" bei einer englischen Sprachvariante und dem Sprachbefehl "Hilfe" bei einer deutschen Sprachvariante kann jeweils dasselbe (international verständliche) Symbol zugeordnet werden.

Auch die Gestaltungsfreiheit bei der Festlegung gut unterscheidbarer Sprachbefehle kann durch die Erfindung gesteigert werden. Die erfindungsgemäße Zuordnung zwischen akustischer und optischer Ausgabe ermöglicht es, einen möglicherweise eigenständig unverständlichen oder uneindeutigen Wortlaut eines Sprachbefehls zu verwenden, da dieser durch die optische Ausgabe erklärt wird. Beispielsweise kann zum Einschalten der Nebelscheinwerfer eines Kraftfahrzeugs schlicht der Sprachbefehl "Nebel" festgelegt werden, wenn eine optische Ausgabe des Texts "Nebelscheinwerfer ein" dessen Unverständlichkeit behebt.

Insbesondere bei einer optischen Ausgabe in Symbolform kann es vorteilhaft sein, für zumindest einen Sprachbefehl auch dann eine optische Ausgabe vorzusehen (bei Ausgabe in Symbolform also ein Symbol anzuzeigen), wenn der jeweilige Sprachbefehl aktuell nicht verfügbar ist. Dies erleichtert dem Bediener die visuelle Orientierung. Die bestehende oder nicht bestehende Verfügbarkeit kann optional durch eine Variation der optischen Ausgabe, also beispielsweise durch eine Zusatzmarkierung (z.B. Durchstreichen) oder eine farbliche oder grafische Veränderung des Symbols veranschaulicht werden.

Unter einem Sprachbefehl im Sinne der Erfindung sind nicht nur tatsächliche Befehle gemäß programmier-technischer Terminologie zu verstehen. Die Erfindung ist selbstverständlich auf jede vom Bediener in ein Spracheingabesystem einzugebende Spracheinheit anwendbar, d.h. auf Statements, Worte, Befehle, Parameter, etc.

Die Erfindung bezieht sich sowohl auf Fälle, in denen alle aktuell oder generell möglichen Sprachbefehle optisch an den Bediener ausgegeben werden, als auch auf Fälle, in welchen nur eine Auswahl aller aktuell oder generell möglichen Sprachbefehle optisch an den Bediener ausgegeben wird.

Ebenso bezieht sich die Erfindung sowohl auf Fälle, in denen alle aktuell oder generell möglichen Sprachbefehle akustisch an den Bediener ausgegeben werden, als auch auf Fälle, in welchen nur eine Auswahl aller aktuell oder generell möglichen Sprachbefehle akustisch an den Bediener ausgegeben wird.

Gemäß einer bevorzugten Ausführungsform der Erfindung werden sämtliche optisch ausgegebenen möglichen Sprachbefehle auch akustisch ausgegeben. Die optische und die akustische Ausgabe erscheinen für den Bediener dann besonders konsistent.

Es kann jedoch auch vorteilhaft sein, wenn die Menge der akustisch ausgegeben möglichen Sprachbefehle geringer ist als die der optisch ausgegebenen. Die gesamte Zeitdauer der akustischen Ausgabe kann dadurch reduziert werden. Beispielsweise kann die Erfindung so ausgeführt werden, dass nur bzw. insbesondere solche Sprachbefehle akustisch ausgegeben werden, deren Wortlaut sich für ungeübte Bediener nur schwer aus der optischen Darstellung entnehmen lässt. Alternativ können nur bzw. insbesondere solche Sprachbefehle akustisch ausgegeben werden, die in der aktuellen Situation erwartungsgemäß zu bevorzugen sind. Eine entsprechende Auswahl kann systemseitig beispielsweise anhand des Benutzerverhaltens in der Vergangenheit getroffen werden. Alternativ können nur bzw. insbesondere solche Sprachbefehle akustisch ausgegeben werden, die typischerweise besonders selten verwendet werden und dem Bediener daher weniger geläufig sind.

Ähnlich kann mit der Reihenfolge der Sprachbefehle verfahren werden. Grundsätzlich kann sowohl die Anordnungsreihenfolge der optischen Ausgabe, beispielsweise die Sortierung einer Liste, als auch die Zeitreihenfolge der akustischen Ausgabe einzeln oder gemeinsam kontext-sensitiv variiert werden. So können beispielsweise solche Sprachbefehle zuerst oder zuletzt ausgegeben werden, deren Wortlaut sich für ungeübte Bediener nur schwer aus der optischen Darstellung entnehmen lässt. Alternativ können beispielsweise solche Sprachbefehle zuerst oder zuletzt ausgegeben werden, die in der aktuellen Situation erwartungsgemäß zu bevorzugen sind. Alternativ können beispielsweise solche Sprachbefehle zuerst oder zuletzt ausgegeben werden, die typischerweise besonders selten verwendet werden und dem Bediener daher weniger geläufig sind.

Gemäß einer bevorzugten Ausführungsform der Erfindung unterscheidet sich die Zeitreihenfolge der Sprachbefehle in der akustischen Ausgabe von der Anordnungsreihenfolge der entsprechenden Sprachbefehle in der optischen Ausgabe. Es können somit in der akustischen Ausgabe solche Sprachbefehle zuerst ausgegeben werden, deren Wortlaut sich für ungeübte Bediener nur schwer aus der optischen Darstellung entnehmen lässt, oder solche Sprachbefehle, die in der aktuellen Situation erwartungsgemäß zu bevorzugen sind, oder solche Sprachbefehle, die typischerweise besonders selten verwendet werden und dem Bediener daher weniger geläufig sind. Die Anordnungsreihenfolge der optischen Ausgabe hingegen kann nach anderen Kriterien gewählt werden. Vorzugsweise wird die Anordnungsreihenfolge der optischen Ausgabe so gewählt, dass sich der Bediener in dieser besonders schnell und/oder einfach zurechtfindet. Beispielsweise kann die optische Ausgabe einer textuellen Liste alphabetisch erfolgen. Die zweidimensionale optische Ausgabe eines grafischen Desktops mit auf diesem Desktop angeordneten Symbolen kann situationsunabhängig stets so erfolgen, dass jedes Symbol einen angestammten Platz auf diesem Desktop hat und der Bediener somit sehr schnell und einfach feststellen kann, ob das jeweilige Symbol bzw. der zugehörige Sprachbefehl in der aktuellen Situation vorhanden bzw. verfügbar ist. Dennoch kann dem Bediener Zusatzinformation durch geeignete Wahl der Zeitreihenfolge der akustischen Ausgabe mitgeteilt werden. Die Informationsdichte der gesamten Ausgabe an den Bediener kann durch die beschriebene Ausführungsform der Erfindung also erhöht werden, ohne den Bediener übermäßig zu belasten oder zu verwirren.

Vorzugsweise wird die erfindungsgemäße simultane optische und akustische Präsentation möglicher Sprachbefehle durch eine Aktion des Bedieners, beispielsweise Betätigen einer Taste oder Aussprechen eines bestimmten Sprachbefehls, oder durch die Erfüllung bestimmter Kriterien innerhalb eines Eingabedialogs ausgelöst. Im zweitgenannten Fall kann beispielsweise eine vorangehende uneindeutige oder unvollständige Spracheingabe ein "Nachfragen" des Spracheingabesystems zur Folge haben. Es können dann mehrere Sprachbefehle, die einer vorangehenden uneindeutigen Eingabe nahekommen, oder mehrere Sprachbefehle, die eine vorangehende unvollständige Eingabe vervollständigen könnten, in erfindungsgemäßer Art und Weise an den Bediener ausgegeben werden.

Die erfindungsgemäße optische Hervorhebung eines gerade akustisch ausgegebenen Sprachbefehls kann in vielfältiger Art und Weise erfolgen. Bei textueller Darstellung ist beispielsweise ein Farbwechsel, Fettdruck, Unterstreichung, Umrahmung, Einrückung oder ein auf den Text gerichteter Markierungspfeil denkbar.

Die Erfindung ist in vielerlei Anwendungsfeldern einsetzbar. Vorzugsweise findet die Erfindung Anwendung in einem Kraftfahrzeug und das Spracheingabesystem dient zur Steuerung zumindest einer Funktion des Kraftfahrzeugs. Die optische Ausgabe kann dann durch einen Bordmonitor oder ein Head-Up-Display des Kraftfahrzeugs erfolgen.

Anhand der beigefügten Zeichnungen wird die Erfindung weiter erläutert. Dabei zeigen schematisch
- Fig. 1a: einen ersten Zustand der optischen Ausgabe möglicher Sprachbefehle in Listenform auf einem Bordmonitor eines Kraftfahrzeugs bei einer ersten Variante der Erfindung,
- Fig. 1b: einen zweiten Zustand der optischen Ausgabe möglicher Sprachbefehle bei der ersten Variante der Erfindung,
- Fig. 2a: einen ersten Zustand der optischen Ausgabe möglicher Sprachbefehle in Symbolform auf einem Bordmonitor eines Kraftfahrzeugs bei einer zweiten Variante der Erfindung,
- Fig. 2b: einen zweiten Zustand der optischen Ausgabe möglicher Sprachbefehle bei der zweiten Variante der Erfindung.

In einem einfachen Ausführungsbeispiel zur Veranschaulichung der Erfindung seien zur Steuerung eines Autoradios in einem Kraftfahrzeug lediglich fünf Sprachbefehle vorgesehen. Der vom Spracheingabesystem erwartete Wortlaut der Sprachbefehle lautet "Radio ein", "Radio aus", "leiser","lauter" bzw. "Senderwahl".

Bei einer ersten Variante der Erfindung werden sämtliche möglichen, d.h. verfügbaren, Sprachbefehle in einer textuellen Liste optisch ausgegeben. Die Ausgabe erfolgt über einen im Kraftfahrzeug-Innenraum vorgesehenen Bordmonitor 1. Betätigt der Bediener eine im Kraftfahrzeug-Innenraum vorgesehene Hilfetaste, werden die möglichen Sprachbefehle zudem akustisch ausgegeben. Die möglichen Sprachbefehle werden gewissermaßen "vorgelesen".

Im vorliegenden einfachen Beispiel wird der akustischen Ausgabe zur Information des Bedieners zudem der akustische Hinweis vorangestellt: "Sie haben die folgenden Auswahlmöglichkeiten."

Um den Bediener weiter zu unterstützen, wird in der optischen Ausgabe stets derjenige Sprachbefehl, der gerade akustisch ausgegeben wird, optisch durch einen Rahmen 2 hervorgehoben.

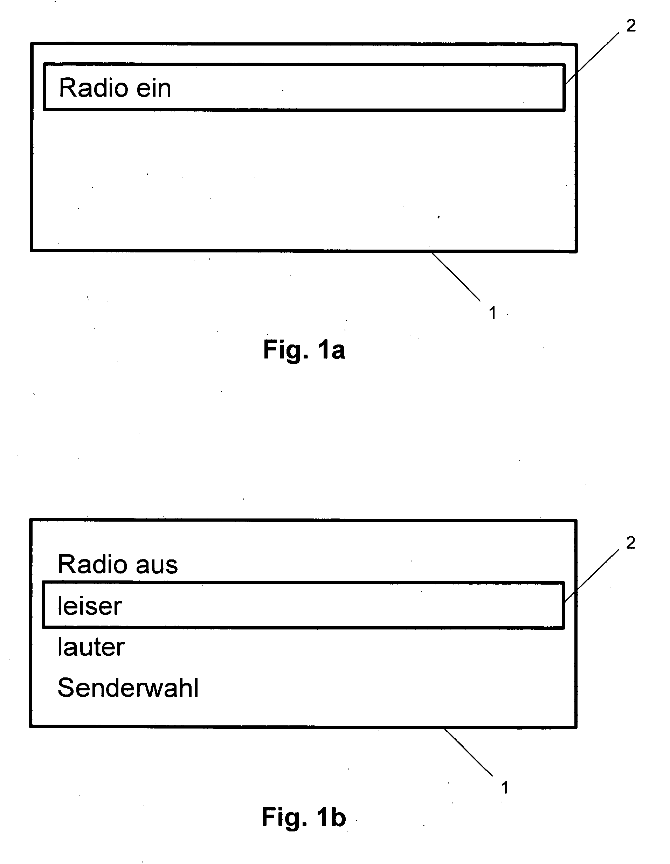

Die Zeichnungen Fig. 1a und Fig. 1b zeigen zwei verschiedene Zustände der optischen Ausgabe auf dem Bordmonitor 1.

Bei ausgeschaltetem Radio ist lediglich der Befehl "Radio ein" möglich bzw. verfügbar. Nur während dieser "vorgelesen" wird, erscheint der in Fig. 1a dargestellte Rahmen 2.

Bei eingeschaltetem Radio sind die Befehle "Radio aus", "leiser", "lauter" bzw. "Senderwahl" möglich bzw. verfügbar. Die vier möglichen Sprachbefehle werden nacheinander akustisch ausgegeben. Der jeweils aktuell ausgegebene Sprachbefehl wird durch einen Rahmen 2 hervorgehoben. Im vorliegenden einfachen Beispiel entspricht die Zeitreihenfolge der akustischen Ausgabe der Anordnungsreihenfolge der Liste auf dem Bordmonitor 1. Der Rahmen 2 in Fig. 1b "wandert" also während des Vorlesens der Sprachbefehle auf dem Bordmonitor 1 von oben nach unten, d.h. vom ersten über den zweiten und dritten zum vierten Sprachbefehl. Der in Fig. 1b abgebildete Zustand (Rahmen 2 um den Sprachbefehl "leiser") des Bordmonitors 1 hält nur solange an wie das Vorlesen des Sprachbefehls "leiser" andauert.

Der Bediener kann während der simultan erfolgenden akustischen und optischen Ausgabe selbst entscheiden, ob er seine Aufmerksamkeit der akustischen Ausgabe, der optischen Ausgabe oder beiden Ausgaben widmet. Die Hervorhebung durch den Rahmen macht stets für den Bediener erkennbar, an welcher Stelle der Liste die akustische Ausgabe bereits angelangt ist.

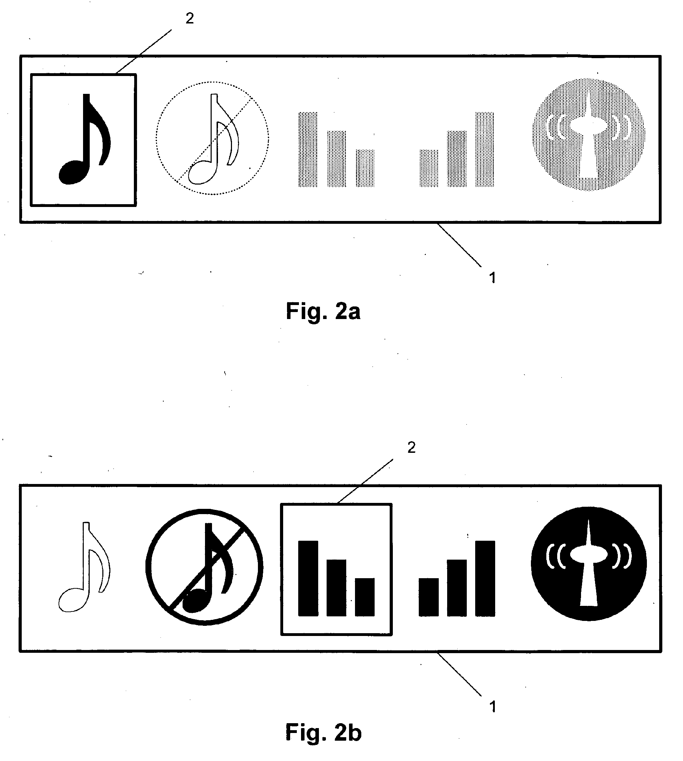

Bei einer zweiten Variante der Erfindung werden sämtliche möglichen, d.h. verfügbaren, Sprachbefehle optisch durch Symbole ausgegeben. Die Symbole aller generell zur Steuerung des Autoradios vorgesehenen Sprachbefehle haben ihren festen angestammten Platz auf dem Bordmonitor 1. An der Farbintensität der einzelnen Symbole kann der Bediener jedoch erkennen, welche Sprachbefehle aktuell möglich, d.h. verfügbar, sind (vgl. Unterschiede der Farbintensität zwischen Fig. 2a und Fig. 2b).

Die Zeichnungen Fig. 2a und Fig. 2b zeigen zwei verschiedene Zustände der optischen Ausgabe auf dem Bordmonitor 1.

Bei ausgeschaltetem Radio (Fig. 2a) ist lediglich der Befehl "Radio ein" möglich bzw. verfügbar. Er wird optisch repräsentiert durch das Symbol einer Musiknote. Die Symbole der anderen Sprachbefehle, welche im in Fig. 2a abgebildeten ausgeschalteten Zustand nicht verfügbar sind, werden in geringer Farbintensität dargestellt.

Betätigt der Bediener nun - wie bei der ersten Variante der Erfindung - die im Kraftfahrzeug-Innenraum vorgesehene Hilfetaste, werden die möglichen Sprachbefehle akustisch ausgegeben. Akustisch ausgegeben wird jeweils der vom Spracheingabesystem erwartete Wortlaut der Sprachbefehle.

Im ausgeschalteten Zustand ist nur der Sprachbefehl "Radio ein" möglich. Nur während dieser akustisch ausgegeben wird, erscheint zur optischen Hervorhebung der in Fig. 2a dargestellte Rahmen 2 um das zugehörige Notensymbol.

Bei eingeschaltetem Radio (Fig. 2b) sind die Befehle "Radio aus", "leiser", "lauter" bzw. "Senderwahl" möglich bzw. verfügbar. Die vier zugehörigen Symbole sind nun bei eingeschaltetem Radio in voller Farbintensität auf dem Bordmonitor 1 dargestellt. Das zum Sprachbefehl "Radio ein" gehörige Symbol hingegen ist nun in geringer Farbintensität dargestellt, da der Sprachbefehl aktuell nicht verfügbar ist.

Bei Betätigung der Hilfetaste werden die vier möglichen Sprachbefehle nacheinander akustisch ausgegeben. Das zu dem jeweils aktuell ausgegebenen Sprachbefehl gehörige Symbol wird durch einen Rahmen 2 hervorgehoben. Im vorliegenden einfachen Beispiel entspricht zunächst die Zeitreihenfolge der akustischen Ausgabe der Anordnungsreihenfolge der Symbole auf dem Bordmonitor 1. Der Rahmen 2 in Fig. 2b "wandert" also während der akustischen Ausgabe der Sprachbefehle auf dem Bordmonitor 1 von links nach rechts, d.h. vom zweiten über das dritte und vierte bis zum fünften Symbol. Der in Fig. 2b abgebildete Zustand (Rahmen 2 um das zum Sprachbefehl "leiser" gehörige Symbol) des Bordmonitors 1 hält nur solange an wie die akustische Ausgabe des Sprachbefehls "leiser" andauert.

Gemäß einer alternativen Ausführungsform, die ebenfalls anhand von Fig. 2b diskutiert werden soll, werden Sprachbefehle, die der Bediener innerhalb eines definierten Nutzungszeitraums (z.B. eine Woche) ohne Inanspruchnahme einer Hilfe des Systems (z.B. Betätigung der Hilfetaste) erfolgreich verwendet hat, nicht akustisch ausgegeben. Durch die somit reduzierte akustische Ausgabe kann der Eingabedialog insgesamt beschleunigt werden und der Bediener wird nicht durch unerwünschte Hilfestellung "belästigt". Der Sprachbefehl "Radio aus" sei ein solcher zuletzt erfolgreich verwendeter Sprachbefehl. Sein Wortlaut wird nicht akustisch ausgegeben, da aufgrund der erfolgreichen Verwendung davon auszugehen ist, dass die Bedeutung des Befehls und der zu verwendende Wortlaut dem Bediener bekannt sind. Das zu dem Sprachbefehl gehörige Symbol in voller Farbintensität verdeutlicht dem Bediener dennoch zusätzlich optisch die Verfügbarkeit des Sprachbefehls. Der Bediener wird somit daran erinnert bzw. kann sich vergewissern, dass er den Sprachbefehl "Radio aus" verwenden könnte.

Die übrigen bei eingeschaltetem Radio verfügbaren Sprachbefehle "leiser", "lauter" und "Senderwahl" seien im Beispiel zuletzt nicht erfolgreich verwendet worden. Bei Betätigung der Hilfetaste wird daher der Wortlaut dieser drei Sprachbefehle nacheinander akustisch ausgegeben. Das zu dem jeweils aktuell ausgegebenen Sprachbefehl gehörige Symbol wird wieder durch einen Rahmen 2 hervorgehoben. Auch hierbei entspreche der Einfachheit halber die Zeitreihenfolge der akustischen Ausgabe der Anordnungsreihenfolge der Symbole auf dem Bordmonitor 1. Der Rahmen 2 in Fig. 2b "wandert" dann also während der akustischen Ausgabe der Sprachbefehle auf dem Bordmonitor 1 wiederum von links nach rechts, allerdings diesmal nur vom dritten über das vierte bis zum fünften Symbol. Der in Fig. 2b abgebildete Zustand (Rahmen 2 um das zum Sprachbefehl "leiser" gehörige Symbol) des Bordmonitors 1 hält wieder nur solange an wie die akustische Ausgabe des Sprachbefehls "leiser" andauert.

Wie oben bereits angedeutet, kann die Zeitreihenfolge der akustischen Ausgabe auch von der Anordnungsreihenfolge der Symbole auf dem Bordmonitor 1 abweichen. So kann beispielsweise der über den längsten Zeitraum nicht verwendete Sprachbefehl zuerst akustisch ausgegeben werden, da aufgrund der lange zurückliegenden letzten Verwendung davon auszugehen ist, dass sich der Bediener an dessen Wortlaut am wenigsten erinnern kann. Die Anordnungsreihenfolge auf dem Bordmonitor 1 wird jedoch bewusst beibehalten, um den Bediener nicht zu verwirren. Die Hervorhebung des gerade akustisch ausgegebenen Sprachbefehls durch einen Rahmen 2 stellt für den Bediener die Zuordnung zwischen akustischer und optischer Ausgabe her.

## Patentansprüche

1. Verfahren zur Unterstützung des Bedieners eines Spracheingabesystems, bei welchem eine Menge möglicher Sprachbefehle optisch an den Bediener ausgegeben wird,
**dadurch gekennzeichnet,**
**dass** die Sprachbefehle zumindest teilweise nacheinander akustisch an den Bediener ausgegeben werden und
während der akustischen Ausgabe eines Sprachbefehls derselbe Sprachbefehl in der optischen Ausgabe hervorgehoben wird.

2. Verfahren nach Anspruch 1, **dadurch gekennzeichnet,**
**dass** die optische Ausgabe zumindest teilweise in Listenform erfolgt.

3. Verfahren nach einem der Ansprüche 1 oder 2, **dadurch gekennzeichnet,**
**dass** die optische Ausgabe zumindest teilweise in Symbolform erfolgt.

4. Verfahren nach einem der Ansprüche 1 oder 3, **dadurch gekennzeichnet,**
**dass** die optische Ausgabe zumindest teilweise in Textform unter Verwendung von Abkürzungen erfolgt.

5. Verfahren nach einem der Ansprüche 1 bis 4, **dadurch gekennzeichnet,**
**dass** die Zeitreihenfolge der Sprachbefehle in der akustischen Ausgabe sich von der Anordnungsreihenfolge der entsprechenden Sprachbefehle in der optischen Ausgabe unterscheidet.

6. Verfahren nach einem der Ansprüche 1 bis 5, **dadurch gekennzeichnet,**
**dass** die Zeitreihenfolge der Sprachbefehle in der akustischen Ausgabe situationsabhängig gewählt wird.

7. Verfahren nach Anspruch 6, **dadurch gekennzeichnet,**
**dass** die Anordnungsreihenfolge der Sprachbefehle in der optischen Ausgabe situationsunabhängig festgelegt ist.

8. Verfahren nach einem der Ansprüche 1 bis 7, **dadurch gekennzeichnet,**
**dass** das Spracheingabesystem zur Steuerung zumindest einer Funktion eines Kraftfahrzeugs dient.

9. Verfahren nach Anspruch 8, **dadurch gekennzeichnet,**
**dass** die optische Ausgabe durch einen Bordmonitor oder ein Head-Up-Display des Kraftfahrzeugs erfolgt.
